# FASCICULE DE BREVET EUROPEEN

(11) **EP 4 512 273 B1**
(45) Date de publication et mention de la délivrance du brevet: **25.03.2026**
(21) Numéro de dépôt: 23192986.0
(22) Date de dépôt: 23.08.2023
(51) Int. Cl.: A44C 27/00, B44C 1/22, B44C 3/10

(54) **PROCÉDÉ DE DÉCORATION EN TROIS DIMENSIONS D'UN SUBSTRAT AFIN DE RÉALISER UNE PIÈCE D'HABILLAGE**
VERFAHREN ZUR DREIDIMENSIONALEN DEKORATION EINES SUBSTRATS ZUR HERSTELLUNG EINES VERKLEIDUNGSTEILS
METHOD FOR THREE-DIMENSIONAL DECORATION OF A SUBSTRATE IN ORDER TO PRODUCE A TRIM PART

(43) Date de publication de la demande: 26.02.2025
(73) Titulaire: Comadur S.A., 2400 Le Locle (CH)
(72) Inventeur: LE BOUDOUIL, Damien, 25800 Valdahon (FR)
(74) Mandataire: ICB SA

(56) Documents cités:
- EP-A1- 3 453 684
- EP-A1- 3 839 659
- EP-B1- 3 536 826

## Description

### Domaine technique de l'invention

L'invention relève du domaine de la décoration de pièces d'horlogerie, de bijouterie ou d'articles de mode, et notamment de la fabrication de pièces d'habillage.

Plus particulièrement, l'invention concerne un procédé de décoration en trois dimensions d'un substrat afin de réaliser une pièce d'habillage. Ce procédé peut s'appliquer avantageusement à toute pièce d'habillage dans le domaine de l'horlogerie, de la bijouterie, des articles de mode tels que les articles de maroquinerie, de lunetterie, d'instruments d'écriture ou les appareils portables électroniques.

### Arrière-plan technologique

Il existe de nombreux procédés pour la réalisation de décors en relief sur une surface d'un substrat afin de former une pièce d'habillage, telle qu'un cadran, une platine, un pont, un rouage, une masse oscillante, une lunette, une carrure, des maillons d'un bracelet ou un fermoir d'un bracelet, dans le domaine de l'horlogerie.

Parmi ces procédés, il existe ceux permettant de générer un masque sur un substrat, le masque comportant des ouvertures dont les contours correspondent à la forme d'éléments du décor souhaité. Ces ouvertures sont remplies d'un matériau constituant les éléments décoratifs, puis le masque est éliminé. Le document EP3839659A décrit un tel procédé Il consiste d'abord à préparer la pièce en définissant l'épaisseur et le contour de l'élément décoratif souhaité, puis à appliquer sur la surface à décorer un revêtement de masquage dont l'épaisseur est au moins égale à celle de l'élément à créer. Dans ce revêtement, on réalise une ou plusieurs cavités correspondant exactement au contour de l'élément décoratif, définissant ainsi un volume avec la surface de la pièce. Ce volume est ensuite rempli d'un matériau de remplissage destiné à former l'élément décoratif, et enfin le revêtement de masquage est retiré, laissant l'élément décoratif intégré à la surface de la pièce.

Bien que simple, ce procédé présente un certain nombre d'inconvénients. En effet, dans certains cas, le masque peut ne pas être intimement en contact avec la surface du substrat, ce qui peut impliquer des problèmes de respect des tolérances de fabrication du décor.

Un autre inconvénient vient du fait que cette méthode nécessite que le dépôt des éléments décoratifs n'endommage pas le masque, auquel cas les tolérances de fabrication ne seraient pas respectées, et que le masque puisse être retiré sans endommager le substrat et les décors. Cette méthode offre donc très peu de liberté quant aux matériaux disponibles pour la réalisation du substrat et des décors.

### Résumé de l'invention

L'invention résout les inconvénients précités en proposant une solution permettant d'assurer le respect des tolérances de fabrication des décors et permettant de garantir la tenue du masque lors du dépôt des éléments décoratifs et le respect de l'intégrité du substrat et des décors lors du retrait du masque.

À cet effet, l'invention concerne un procédé de décoration en trois dimensions d'un substrat afin de réaliser une pièce d'habillage comprenant les étapes de :
- dépôt d'au moins une couche de base en émail sur une surface d'habillage d'un substrat réalisé en céramique ;
- cuisson du substrat recouvert de la couche de base ;
- gravure de la couche de base selon un motif prédéfini de décor de sorte à générer une ou des cavités borgnes s'étendant entre un fond formé par le substrat et une ouverture formée par la couche de base ;
- dépôt d'une couche décorative en matériau céramique et/ou en matériau métallique sur la couche de base et les cavités de sorte à remplir lesdites cavités afin de former des éléments décoratifs ;
- surfaçage de la couche décorative de sorte à éliminer l'ensemble de ladite couche déposée sur la couche de base ;
- tribofinition du substrat et des couches de base et décorative de sorte à éliminer l'ensemble de la couche de base.

Dans des modes particuliers de mise en œuvre, l'invention peut comporter en outre l'une ou plusieurs des caractéristiques suivantes, prises isolément ou selon toutes les combinaisons techniquement possibles.

Dans des modes particuliers de mise en œuvre, la couche de base est surfacée à la suite de l'étape de cuisson.

Dans des modes particuliers de mise en œuvre, la couche décorative est déposée de sorte qu'elle présente, dans les cavités, une épaisseur supérieure ou égale à l'épaisseur des éléments décoratifs à l'issue du procédé.

Dans des modes particuliers de mise en œuvre, la couche de base est en émail borosilicate.

Dans des modes particuliers de mise en œuvre, la couche de base est en émail borosilicate de sodium.

Dans des modes particuliers de mise en œuvre, lors de l'étape de cuisson la température à laquelle est soumise le substrat recouvert de la couche de base est comprise entre 500°C et 1500°C, préférentiellement sensiblement égale à 1000°C.

### Brève description des figures

D'autres caractéristiques et avantages de l'invention apparaîtront à la lecture de la description détaillée suivante donnée à titre d'exemple nullement limitatif, en référence aux dessins annexés dans lesquels :

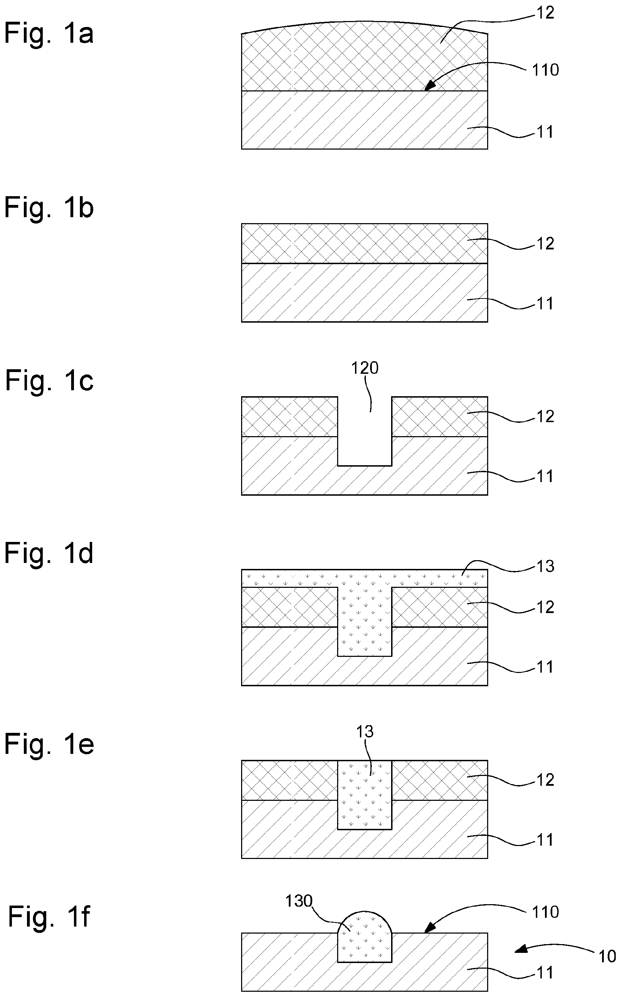

- les figures 1a à 1f représentent schématiquement une vue de section des étapes de réalisation d'un procédé de décoration d'un substrat pour la réalisation d'une pièce d'habillage selon exemple préféré de réalisation de l'invention.

On note que les figures ne sont pas nécessairement dessinées à l'échelle pour des raisons de clarté.

### Description détaillée de l'invention

La présente invention concerne un procédé de décoration en trois dimensions d'un substrat 11 afin de réaliser une pièce d'habillage 10, tel que représenté sur les figures successives 1a à 1f.

Le procédé comporte tout d'abord une étape de dépôt d'au moins une couche de base 12 en émail sur une surface d'habillage 110 d'un substrat 11 réalisé en céramique, comme le montre la figure 1a. La surface d'habillage 110 est destinée à être visible pour un utilisateur une fois la pièce d'habillage 10 réalisée. Préférentiellement, la couche de base 12 est déposée sur l'ensemble de la surface d'habillage 110.

Dans l'exemple préféré de mise en œuvre de l'invention, la couche de base 12 est réalisée en émail borosilicate, en particulier en émail borosilicate de sodium, pour des raisons qui sont décrites en détail dans la suite du texte. La couche de base 12 peut être déposée par trempage, par projection ou par application au pinceau. Dans le présent texte, par abus de langage et pour simplifier la lecture, le singulier est employé lorsqu'il est question de la couche de base 12, toutefois la couche de base 12 peut être composée d'un empilement de couches.

Avantageusement, le substrat 11 peut être réalisé en toute céramique dense, tel qu'en zircone, en alumine, en Grenat d'yttrium et d'aluminium aussi connu sous l'accronyme « YAG » signifiant *Yttrium Aluminium Garnet,* en saphir ou en un mélange de ces éléments.

La couche de base 12 et le substrat 11 sont ensuite cuits dans un four à une température comprise entre 500 et 1500 degrés Celsius, préférentiellement à 1000 degrés, de sorte à entraîner la fusion de la couche de base 12 afin qu'elle adhère chimiquement au substrat 11. Grâce à sa composition, l'adhérence de la couche de base 12 sur le substrat 11 est garantie à la suite de cette étape.

La couche de base 12 est préférentiellement surfacée à la suite de l'étape de cuisson de sorte à aplanir sa surface visible et de sorte à égaliser son épaisseur. En effet, comme la figure 1a le représente de façon exagérée, la couche de base 12 est susceptible de présenter une variation d'épaisseur. Notamment, la surface de la couche de base 12 peut présenter une succession de creux et de bosses due à un phénomène de tension de surface apparaissant lors de la cuisson de la couche de base 12, et l'épaisseur de la couche de base 12 peut être plus importante au centre de la surface d'habillage 110 que sur sa périphérie à cause de la mouillabilité de ladite couche. Par ailleurs, si la surface d'habillage 110 ne s'étend pas horizontalement, c'est-à-dire qu'elle forme une pente, la couche de base 12 peut avoir tendance à s'écouler, lors de sa cuisson, dans le sens de la pente, et donc à générer une surépaisseur, sous l'effet de la pesanteur et du fait de sa viscosité à chaud.

Le surfaçage de la couche de base 12 est réalisé préférentiellement par abrasion mécanique, par exemple par meulage ou par ponçage. Le résultat de cette étape est représenté schématiquement sur la figure 1b.

La couche de base 12 est par la suite gravée selon un motif prédéfini de décor. Plus précisément, cette étape de gravure a pour objectif de générer une ou des cavités 120 borgnes dans la couche de base 12 afin de loger des éléments décoratifs 130 en relief, tel qu'abordé plus en détail dans la suite du texte. Les cavités 120 s'étendent entre un fond formé par le substrat 11 et une ouverture formée par la couche de base 12 comme visible sur la figure 1c. L'étape de surfaçage, à la suite de laquelle, la surface visible de la couche de base 12 est aplanie, permet de maitriser les tolérances de fabrication des cavités 120.

Avantageusement, les cavités 120 peuvent également s'étendre dans le substrat 11, comme représenté sur les figures 1c à 1f. Cette caractéristique permet d'augmenter encore l'accroche des éléments décoratifs 130 dans le substrat 11.

Préférentiellement, l'étape de gravure est réalisée par laser, mais peut être réalisée par toute solution technique appropriée, par exemple par usinage mécanique.

Ensuite, une couche décorative 13 est déposée sur la couche de base 12 et dans les cavités 120, comme le montre la figure 1d. Une telle couche décorative 13 peut être déposée par sprayage, par pressage, par projection thermique et plasma, ou par dépôt de barbotine, selon le matériau envisagé pour constituer la couche décorative 13. En particulier, la couche décorative 13 peut être réalisée en matériau céramique, par exemple dans un émail, tel qu'un émail borosilicaté ou un feldspath, et/ou en matériau métallique. Dans le présent texte les termes « matériau métallique » désignent tout alliage métallique, tout métal pur ou tout composite métallique.

Le matériau constituant la couche décorative 13 présente avantageusement un point de fusion inférieur à la température de transition vitreuse du matériau constituant la couche de base 12 de sorte que, lors du dépôt de la couche décorative 13, la couche de base 12 n'est pas détériorée. A titre d'exemple, la température de fusion du matériau constituant la couche de base 12 est inférieure à 600 degrés Celsius.

La couche décorative 13 est déposée de sorte qu'elle présente, dans les cavités 120, une épaisseur supérieure ou égale à l'épaisseur souhaitée des éléments décoratifs 130 à l'issue du procédé.

Une étape de surfaçage est mise en œuvre après le dépôt de la couche décorative 13 de sorte à éliminer l'ensemble de ladite couche décorative 13 déposée sur la couche de base 12, comme représenté sur la figure 1e. Une telle opération de surfaçage est avantageusement réalisée par abrasion mécanique, par exemple par meulage ou par ponçage.

Une fois la couche décorative 13 présente uniquement dans les cavités 120, une étape de tribofinition est mise en œuvre de sorte à éliminer l'ensemble de la couche de base 12 et à former la pièce d'habillage 10. Avantageusement, grâce au matériau de la couche de base 12, celle-ci est éliminée très facilement et rapidement par l'étape de tribofinition, sans que les éléments abrasifs ne détériorent de façon incontrôlée la surface d'habillage 110 du substrat 11 ou les éléments décoratifs 130 formés par les reliquats de la couche décorative 13.

La figure 1f illustre schématiquement cette pièce d'habillage 10 et les effets potentiels de l'étape de tribofinition sur l'élément décoratif 130. En particulier, les angles vifs de l'élément décoratifs 130 peuvent être arrondis par l'abrasion causée lors de l'étape de tribofinition.

Le matériau de la couche décorative 13 est choisi de sorte à mieux résister à l'étape de tribofinition que la couche de base 12, cette dernière ayant une vocation sacrificielle.

De manière plus générale, il est à noter que les modes de mise en œuvre et de réalisation considérés ci-dessus ont été décrits à titre d'exemples non limitatifs, et que d'autres variantes sont par conséquent envisageables.

## Revendications

1. Procédé de décoration en trois dimensions d'un substrat (11) afin de réaliser une pièce d'habillage (10) comprenant les étapes de :
- dépôt d'au moins une couche de base (12) en émail sur une surface d'habillage (110) d'un substrat (11) réalisé en céramique ;
- cuisson du substrat (11) recouvert de la couche de base (12) ;
- gravure de la couche de base (12) selon un motif prédéfini de décor de sorte à générer une ou des cavités (120) borgnes s'étendant entre un fond formé par le substrat (11) et une ouverture formée par la couche de base (12) ;
- dépôt d'une couche décorative (13) en matériau céramique et/ou en matériau métallique sur la couche de base (12) et les cavités (120) de sorte à remplir lesdites cavités (120) afin de former des éléments décoratifs (130), le matériau de la couche décorative (13) étant choisi de sorte que sa température de fusion soit inférieure à la température de transition vitreuse du matériau constituant la couche de base (12) ;
- surfaçage de la couche décorative (13) de sorte à éliminer l'ensemble de ladite couche déposée sur la couche de base (12) ;
- tribofinition du substrat (11) et des couches de base (12) et décorative (13) de sorte à éliminer l'ensemble de la couche de base (12).

2. Procédé selon la revendication 1, dans lequel la couche de base (12) est surfacée à la suite de l'étape de cuisson.

3. Procédé selon l'une des revendications 1 ou 2, dans lequel la couche décorative (13) est déposée de sorte qu'elle présente, dans les cavités (120), une épaisseur supérieure ou égale à l'épaisseur des éléments décoratifs (130) à l'issue du procédé.

4. Procédé selon l'une des revendications 1 à 3, dans lequel la couche de base (12) est en émail borosilicate.

5. Procédé selon la revendication 4, dans lequel la couche de base (12) est en émail borosilicate de sodium.

6. Procédé selon l'une des revendications 1 à 5, dans lequel lors de l'étape de cuisson la température à laquelle est soumise le substrat (11) recouvert de la couche de base (12) est comprise entre 500°C et 1500°C, préférentiellement sensiblement égale à 1000°C.

## Patentansprüche

1. Verfahren zur dreidimensionalen Dekoration eines Substrats (11) zur Herstellung eines Verkleidungselements (10), umfassend die Schritte:
- Aufbringen von mindestens einer Basisschicht (12) aus Emaille auf eine Verkleidungsfläche (110) eines aus Keramik hergestellten Substrats (11);
- Brennen des mit der Basisschicht (12) bedeckten Substrats (11);
- Gravieren der Basisschicht (12) gemäß einem vorbestimmten Dekormuster derart, dass eine oder mehrere Blindkavitäten (120) erzeugt werden, die sich zwischen einem durch das Substrat (11) gebildeten Boden und einer durch die Basisschicht (12) gebildeten Öffnung erstrecken;
- Aufbringen einer dekorativen Schicht (13) aus keramischem Material und/oder metallischem Material auf die Basisschicht (12) und in die Kavitäten (120) derart, dass die genannten Kavitäten (120) gefüllt werden, um dekorative Elemente (130) zu bilden, wobei das Material der dekorativen Schicht (13) derart ausgewählt ist, dass dessen Schmelztemperatur unterhalb der Glasübergangstemperatur des die Basisschicht (12) bildenden Materials liegt;
- Oberflächenbearbeiten der dekorativen Schicht (13) derart, dass der gesamte auf der Basisschicht (12) aufgebrachte Anteil der dekorativen Schicht entfernt wird;
- Gleitschleifbehandlung des Substrats (11) sowie der Basisschicht (12) und der dekorativen Schicht (13) derart, dass die gesamte Basisschicht (12) entfernt wird.

2. Verfahren nach Anspruch 1, wobei die Basisschicht (12) im Anschluss an den Brennschritt oberflächenbearbeitet wird.

3. Verfahren nach einem der Ansprüche 1 oder 2, wobei die dekorative Schicht (13) derart aufgebracht wird, dass sie in den Kavitäten (120) eine Dicke aufweist, die größer oder gleich der Dicke der dekorativen Elemente (130) am Ende des Verfahrens ist.

4. Verfahren nach einem der Ansprüche 1 bis 3, wobei die Basisschicht (12) aus Borosilikat-Emaille besteht.

5. Verfahren nach Anspruch 4, wobei die Basisschicht (12) aus Natriumborosilikat-Emaille besteht.

6. Verfahren nach einem der Ansprüche 1 bis 5, wobei während des Brennschritts die Temperatur, der das mit der Basisschicht (12) bedeckte Substrat (11) ausgesetzt wird, zwischen 500 °C und 1500 °C liegt, vorzugsweise etwa 1000 °C beträgt.

## Claims

1. Method for the three-dimensional decoration of a substrate (11) to produce an external part (10), which method comprises the steps of:
- depositing at least one enamel base layer (12) on an external surface (110) of a ceramic substrate (11);
- firing the substrate (11) covered with the base layer (12);
- etching the base layer (12) in a predefined decorative pattern so as to generate one or more blind cavities (120) extending between a bottom formed by the substrate (11) and an opening formed by the base layer (12);
- depositing a decorative layer (13) of ceramic material and/or metallic material on the base layer (12) and the cavities (120) so as to fill said cavities (120) in order to form decorative elements (130), the material of the decorative layer (13) being chosen such that its melting point is below the glass transition temperature of the material constituting the base layer (12);
- surfacing the decorative layer (13) so as to remove all of said layer deposited on the base layer (12);
- tribofinishing the substrate (11), the base layer (12) and the decorative layer (13) to remove the entire base layer (12).

2. Method according to claim 1, wherein the base layer (12) is surfaced after the firing step.

3. Method according to one of claims 1 or 2, wherein the decorative layer (13) is deposited so that its thickness in the cavities (120) is greater than or equal to the thickness of the decorative elements (130) at the end of the method.

4. Method according to one of claims 1 to 3, wherein the base layer (12) is made of borosilicate enamel.

5. Method according to claim 4, wherein the base layer (12) is made of sodium borosilicate enamel.

6. Method according to one of claims 1 to 5, wherein during the firing step, the temperature to which the substrate (11) covered with the base layer (12) is subjected is between 500°C and 1500°C, preferably substantially equal to 1000°C.
